# EUROPÄISCHE PATENTSCHRIFT

(11) **EP 2 540 364 B1**
(45) Veröffentlichungstag und Bekanntmachung des Hinweises auf die Patenterteilung: **26.03.2014**
(21) Anmeldenummer: 11005178.6
(22) Anmeldetag: 27.06.2011
(51) Int. Cl.: B01D 1/20, B01D 17/02, B01D 17/04, B01D 19/00, B05B 1/00, B05B 7/08, C10G 33/00

(54) **Vorrichtung zum Trennen von Fluidgemischen, insbesondere Öl/Wassergemischen**
Device for separating fluid mixtures, in particular oil/water mixtures
Dispositif de séparation de mélanges de fluide, notamment de mélanges huile/eau

(43) Veröffentlichungstag der Anmeldung: 02.01.2013
(73) Patentinhaber: URAG-Industries GmbH, 28259 Bremen (DE)
(72) Erfinder: Schomburg, Joachim, 27619 Schiffdorf (DE)
(74) Vertreter: Seuss, Thomas

(56) Entgegenhaltungen:
- GB-A- 982 598
- GB-A- 191 206 891
- US-A- 4 392 874

## Beschreibung

Die vorliegende Erfindung betrifft die Verwendung einer Vorrichtung zum Trennen von Öl und Wasser in einem Vakuumbehälter in den das Fluidgemisch mittels einer einstellbaren Kegelstumpf-Rundstrahldüse eingestäubt wird.

Verschiedene Vorrichtungen und damit betriebene Trennverfahren sind aus dem Stand der Technik bekannt. Ein wesentlicher Teil der in der DE19510023C1 beschriebenen Vorrichtung ist ein im Vakuumbehälter befindlicher konusförmiger Trennmantel. Weiterer Stand der Technik ergibt sich aus den Druckschriften DE 10129100 A1, DE 10024124 C1, EP 0148444 A2 sowie DE 102006057910 A1. Nachteil des bisherigen Standes der Technik sind die regelmäßig anfallenden Wartungsarbeiten, wie zum Beispiel, dass die im Rahmen der EP 0148444 A2 beschriebenen Koaleszierkörper regelmäßig ausgetauscht werden müssen. Bei den anderen Vorrichtungen sind regelmäßige Reinigungsarbeiten der Trennhilfen, wie zum Beispiel der Trennbleche der DE 19510023 C1 nötig. Ein weiterer Nachteil des Standes der Technik ist der limitierte Durchsatz, der sich nicht ohne weiteres steigern lässt

Das Dokument US 4,392,874 A beschreibt eine Vorrichtung zur Entgasung von Flüssigkeiten durch Erzeugung eines Flüssigkeitsfilms. Das Dokument GB 982598 A beschreibt Sprühdüsen für Autowaschanlagen.

Es besteht daher die Notwendigkeit die vorhandenen Nachteile des Standes der Technik zu überwinden. Hierfür wird die nachfolgend beschriebene Verwendung einer Vorrichtung vorgeschlagen.

Die Lösung der oben gestellten Aufgabe erfolgt durch die Verwendung einer Vorrichtung gemäß Anspruch 1, nämlich die Verwendung einer Vorrichtung zur Trennung von Fluidgemischen, enthaltend eine Vakuumkammer (V), eine Fluidzufuhr (FZ) durch eine Kegelstumpf-Rundstrahldüse (K) einen Flüssigkeitsauslass (FA) im Bodenbereich der Vakuumkammer zur Entnahme des getrockneten Fluides mittels einer Fluidpumpe (FP), einen Gasauslass (GA), der mit einer Vakuumpumpe (VP) verbunden ist,
einen regelbaren Gaseintritt (GE), dadurch gekennzeichnet, dass die Kegelstumpf-Rundstrahldüse (K) besteht aus einem Rohr (R) mit einem verschlossenen Ende (E), wobei das Rohr (R) eine Rohrverjüngung vor dem verschlossenen Ende (E) aufweist, wobei die Rohrverjüngung den Durchmesser des Rohres auf 90-30% des Eingangsdurchmessers (R_{D}) einschränkt, 2-8 orthogonal zur Strömungsrichtung (SR) im Bereich der Verjüngung angebrachte Löcher (L) als Austrittsöffnungen, wobei die Löcher (L) jeweils einen Durchmesser (L_{D}) zwischen einem zwanzigstel und der Hälfte des Rohrdurchmessers an der verjüngten Stelle (R_{J}) aufweisen, eine erste Überwurfmutter (M1) mit einem Außendurchmesser von 1,25 - 2,5 -fachen des Rohrdurchmessers an der verjüngten Stelle (R_{J}) mit schulterförmiger Verjüngung, wobei die Schulter eine Höhe von 0,1-10mm und eine Breite von 90-70% des ursprünglichen Durchmessers aufweist eine zweite Überwurfmutter (M2) mit einem Außendurchmesser von 1,25 - 2,5 -fachen des Rohrdurchmessers an der verjüngten Stelle (R_{J}), mit konischer Ausformung, wobei die Höhe des konischen Teils (K_{H}) zwischen 0,01 und 10 mm und der Konuswinkel (ϕ)zwischen 10° und 80° liegt, wobei die erste und die zweite Überwurfmutter so an dem Rohr angeordnet sind, dass im Bereich der Löcher ein Spalt (Sp) von 0,01 bis 10 mm Breite (Sp_{b}) gebildet wird zur Trocknung von Ölen.

Die benötigte Vorrichtung besteht zunächst aus einer Vakuumkammer, die bevorzugt domförmig ausgestaltet ist (beispielsweise: Höhe = 550mm, Durchmesser=500mm, Volumenbereich von 24 bis 84 Liter). Im oberen Teil der Vakuumkammer befindet sich der Auslass einer Kegelstumpf-Rundstrahldüse gemäß Anspruch 7. Durch die beschriebene Kegelstumpf-Rundstrahldüse wird das einströmende Fluidgemisch kegelförmig zerstäubt, wobei der Kegel sich bevorzugt nach oben öffnet. Eine Eintrittspumpe saugt das Fluidgemisch, insbesondere Öl/Wassergemisch, über ein Saugsieb an und drückt es über die oben genannte einstellbare Kegelstumpf-Rundstrahldüse in den Vakuumbehälter.

Bevorzugt wird das als Düsenhalter fungierende Rohr mit der Kegelstumpf-Rundstrahldüse von oben in den Vakuumbehälter eingeführt. Es sind aber auch andere Ausführungsformen denkbar, beispielsweise von unten oder von der Seite. Bei der letzteren Ausführungsform müsste der Düsenhalter selbstverständlich entsprechend gewinkelt sein.

Die beschriebene Vorrichtung enthält im Bodenbereich ferner einen Flüssigkeitsauslass, durch den das getrocknete Fluid, beispielsweise das getrocknete Öl, entnommen werden kann.

Vorzugsweise wird der Vakuumbehälter eine Füllstandsmesseinrichtung enthalten, welche beispielsweise über einen oder mehrere Schwimmkörper realisiert sein kann. Bei Erreichen des Füllstandmaximums kann beispielsweise das Fluid durch Abpumpen aus dem Flüssigkeitsauslass entnommen werden, während bei Erreichen des Füllstandminimums die Pumpe abgeschaltet wird. Im Normalbetrieb wird versucht, die Pumpenleistungen so einzustellen, dass der Füllstand annähernd im mittleren Bereich stagniert.

Weiterhin enthält der Vakuumbehälter einen Gasauslass zur Evakuierung der Anlage. Der Gasauslass ist mit einer Vakuumpumpe verbunden, die den nötigen Unterdruck (-0,9 bis -0,2 bar, vorzugsweise -0,9 bis -0,5 bar) eingestellt in dem Vakuumbehälter herstellt und beispielsweise über einen Coalescerfilter und einem Schalldämpfer nach Außen gefördert. Optional kann ein weiterer Filter, z.B. ein Kohlefilter nachgeschaltet werden, der allerdings im Regelfall entbehrlich ist, weil die austretende Luft durch einen Coalescerfilter im Regelfall einen Ölgehalt von weniger als 5 ppm enthält.

Darüber hinaus enthält die Vakuumkammer einen regelbaren Gaseintritt. Durch diesen Gaseintritt wird im Betrieb stets eine kontrollierte Menge Gas in die Vakuumkammer eingeführt. Bei dem Gas handelt es sich bevorzugt um Umgebungsluft, die im Prinzip keiner Veränderung bedarf. Die einströmende Luft wird dabei beispielsweise über einen Luftfilter mit 10 µm Filtration und einer Blende mit einer definierten Blendenbohrung von ca. 5 mm und einem nachgeschalteten Drosselrückschlagventil in den Vakuumbehälter geleitet. In Spezialfällen kann die Luft vor dem Eintritt in die Vakuumkammer behandelt werden, beispielsweise getrocknet. Die Vortrocknung könnte sich empfehlen in Fällen hoher Luftfeuchtigkeit, insbesondere wenn ein hoher Trocknungsgrad im Trennprozess erreicht werden soll. In anderen Spezialfällen können sauerstoffarme Gase zugeführt (oder zugemischt) werden, beispielsweise Stickstoff, Argon, Kohlendioxid, insbesondere bei der Trennung von (hoch)entzündlichen Fluiden.

Ein wesentliches Merkmal der beschriebenen Vorrichtung ist die bereits oben genannte Kegelstumpf-Rundstrahldüse zur Zerstäubung des einströmenden Fluidgemisches.
Die Kegelstumpf-Rundstrahldüse besteht aus einem Rohr, durch das das Fluidgemisch strömt. Am ausgangsseitigen Ende des Rohres verjüngt sich dieses. Die Verjüngung führt zu einer Begrenzung des Rohrdurchmessers auf 90-30% des Durchmessers am Rohreingang. Bei einem Rohr mit einem Durchmesser von 45 mm beträgt der Durchmesser in der verjüngten Stelle beispielsweise zwischen 40,5 bis 13,5 mm, bevorzugt zwischen 41 und 31 mm. In dem verjüngten Teil sind orthogonal zur Einströmrichtung des Fluidgemisches Löcher angebracht, durch die das Fluidgemisch ausströmt. Es handelt sich hierbei vorzugsweise um 2 bis 8, insbesondere 4 oder 6 Löcher, welche rotationssymmetrisch um den Umfang der verjüngten Stelle verteilt sind. Die Durchmesser der Löcher hängen von den Rohrdurchmessern an der verjüngten Stelle und der Anzahl der Löcher ab, im Regelfall werden sie die Hälfte des Rohrdurchmessers an der verjüngten Stelle nicht überschreiten, weiterhin werden sie im Regelfall ein zwanzigstel des Rohrdurchmessers an der verjüngten Stelle nicht unterschreiten. Bezogen auf einen Rohrdurchmesser an der verjüngten Stelle von 40 mm werden bevorzugt 4-6 Löcher mit einem Durchmesser von 20 - 2 mm angebracht sein.
Das genannte Rohr ist vorzugsweise außenseitig mit einem Gewinde versehen, welches die Einstellung der unten genannten Düse erleichtert. Der entscheidende Teil der Düse wird durch zwei besonders geformte Muttern mit jeweiligem Innengewinde gebildet:
Bei der ersten Mutter handelt es sich um eine Überwurfmutter mit einem Außendurchmesser von beispielsweise dem 1,25 - 2,5 fachen des Rohrdurchmessers an der verjüngten Stelle. Vorzugsweise weist die erste Mutter im Bereich der Düsenöffnung eine schulterförmige Verjüngung auf. An dieser Stelle verjüngt sich der Außendurchmesser der Mutter auf 90-70 % des ursprünglichen Außendurchmessers. Die Schulterhöhe ist ohne großen Einfluss auf die Trennwirkung, sie liegt im Regelfall in der Größenordnung der weiter unten definierten Spaltbreite, also zwischen 0,01 und 10 mm. Bei einem Rohrdurchmesser von 45mm kann beispielsweise der Lochdurchmesser 2-6 mm betragen. Bei der zweiten Mutter handelt es sich ebenfalls um eine Überwurfmutter mit Außendurchmesser von beispielsweise dem 1,25 - 2,5 fachen des Rohrdurchmessers an der verjüngten Stelle, welche im Bereich des Düsenausgangs eine konische Ausformung hat. Der Konuswinkel ϕ kann zwischen 10° und 80° betragen, bevorzugt sind Werte zwischen 45° und 80°. Die Höhe des konischen Bereiches liegt im Regelfall in der Größenordnung der weiter unten definierten Spaltbreite, also zwischen 0,01 und 10 mm. Bei einem Rohrdurchmesser von 45mm kann sie beispielsweise 2-5 mm betragen.

In einer bevorzugten Ausführungsform der Erfindung weisen beide Muttern gleiche Außendurchmesser auf. Die Höhe der Muttern ist weitgehend ohne Einfluss auf das Trennergebnis. Sie richtet sich vor allem nach den geometrischen Verhältnissen des Rohres und kann von Fachmann ohne weiteres erfinderisches Zutun ermittelt werden.

Beide Muttern werden in einer bevorzugten Ausführungsform der Erfindung durch entsprechende Kontermuttern gesichert. Beim Aufschrauben der genannten Muttern wird in Höhe der Austrittsöffnungen des Führungsrohrs ein Spalt gebildet, dessen Spaltbreite in einfacher Weise veränderbar ist. Die Spaltbreite kann daher leicht auf verschiedene Fluidgemische, Durchflussmengen oder andere Prozessparameter (Temperatur, Druck, Fluidviskosität) angepasst werden. Die Spaltbreite kann zwischen 0,01 und 10 mm gewählt werden, bevorzugt zwischen 0,5 und 1,5 mm. Der Konuswinkel ϕ hängt ebenfalls von den oben genannten Parametern, insbesondere der Art des Fluidgemisches und der Prozessparameter ab. Der Winkel ϕ kann zwischen 10° und 80° eingestellt werden, bevorzugt sind Werte zwischen 45° und 80°.

Obgleich die oben genannte Ausführungsform mit Gewinden (Außengewinde des Rohrs, Innengewinde der Muttern) aufgrund der einfachen Einstellbarkeit die bevorzugte Ausführungsform ist, kennt der Fachmann selbstverständlich andere Möglichkeiten, um entsprechende Überwurfringe mit einem Rohr zu verbinden, so dass eine einfache Einstellbarkeit gegeben ist, beispielsweise durch Verwendung von entsprechend ausgestalteten Feststellringen, die ihrerseits mit Schrauben oder durch Federdruck gesichert sind, an Stelle der o.g. Muttern.

Die beschriebene Düse ist ohne weiteres skalierbar, so dass sie für entsprechend größer dimensionierte Vorrichtungen angepasst werden kann. Bei einem Rohrdurchmesser von ca. 45 mm kann ein Durchsatz von 25 bis 70 L/min eines Öl-/ Wasser-Gemisches erreicht werden.

Ein wichtiger Aspekt der Erfindung ist demnach eine Kegelstumpf-Rundstrahldüse (K) zur Vernebelung von Fluiden, bestehend aus einem Rohr (R) mit einem verschlossenen Ende (E), wobei das Rohr eine Rohrverjüngung vor dem verschlossenen Ende (E) aufweist, wobei die Rohrverjüngung den Durchmesser des Rohres auf 90-30% des Eingangsdurchmessers (R_{D}) einschränkt, 2-8 orthogonal zur Strömungsrichtung (SR) im Bereich der Verjüngung angebrachte Löcher (L) als Austrittsöffnungen, wobei die Löcher jeweils einen Durchmesser (L_{D}) zwischen einem zwanzigstel und der Hälfte des Rohrdurchmessers an der verjüngten Stelle (R_{J}) aufweisen, eine erste Überwurfmutter (M1) mit einem Außendurchmesser von 1,25 - 2,5 -fachen des Rohrdurchmessers an der verjüngten Stelle (R_{J}) mit schulterförmiger Verjüngung, wobei die Schulter eine Höhe (M_{1H}) von 0,1-10mm und eine Breite (M_{1B}) von 90-70% des ursprünglichen Durchmessers aufweist eine zweite Überwurfmutter mit einem Außendurchmesser von 1,25 - 2,5 -fachen des Rohrdurchmessers an der verjüngten Stelle (R_{J}), mit konischer Ausformung, wobei die Höhe des konischen Teils (K_{H}) zwischen 0,01 und 10 mm und der Konuswinkel (ϕ) zwischen 10° und 80° liegt,wobei die erste und die zweite Überwurfmutter so an dem Rohr angeordnet sind, dass im Bereich der Löcher ein Spalt (Sp) von 0,01 bis 10 mm Breite (Sp_{B}) gebildet wird.

Für den mobilen Einsatz, beispielsweise auf Schiffen, in Fahrzeugen oder Flugzeugen enthält die Vorrichtung optional noch eine Neigungsdämpfung des Schwimmkörpers. Diese Neigungsdämpfungsvorrichtung besteht im Wesentlichen aus einem zentralen Rohr, in dem sich der Schwimmkörper bewegen kann. Dieses Rohr ist am unteren und am oberen Ende offen, so dass der fluide Rohrinhalt mit dem Gesamtfluid des Vakuumbehälterinhalts in Wechselwirkung steht. Die genannte Vorrichtung führt dazu, dass bei Neigung der Gesamtvorrichtung, wie sie beispielsweise in der Schifffahrt vorkommen kann, der Schwimmer nur wenig von der jeweiligen Füllposition bei gerader Aufstellung abweicht und somit die genannten Pumpenschaltungen verlässlich ausführen kann. Diese Dämpfungsvorrichtung ist extrem wichtig beispielsweise in der Seefahrt, wenn es bedingt durch hohen Seegang zu Stampf- und Rollbewegungen des Schiffes und der darauf befindlichen Vorrichtung kommt. In Test konnte gezeigt werden, dass die Funktion der Anlage selbst bei Rollgraden von 15° nach beiden Seiten vollständig erhalten bleibt.

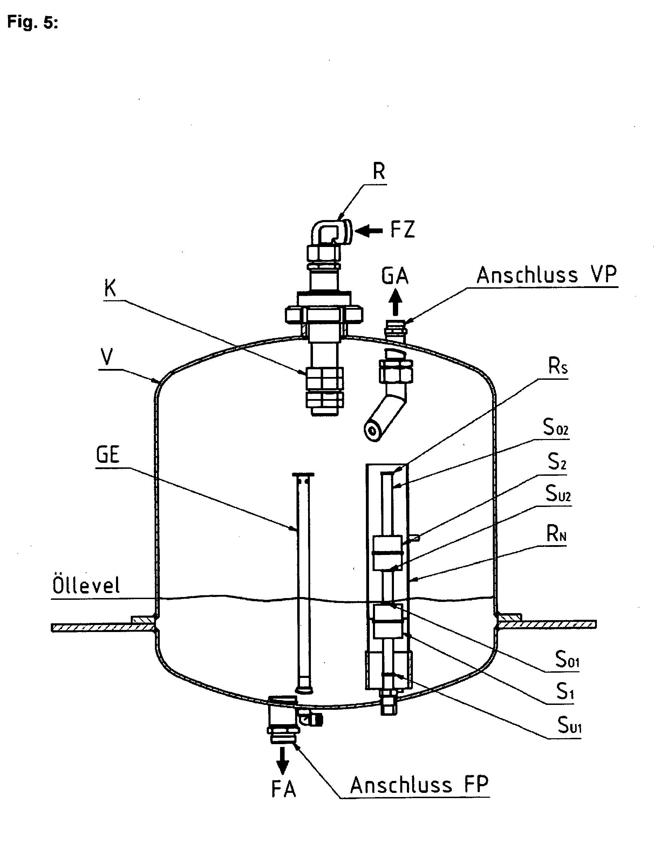

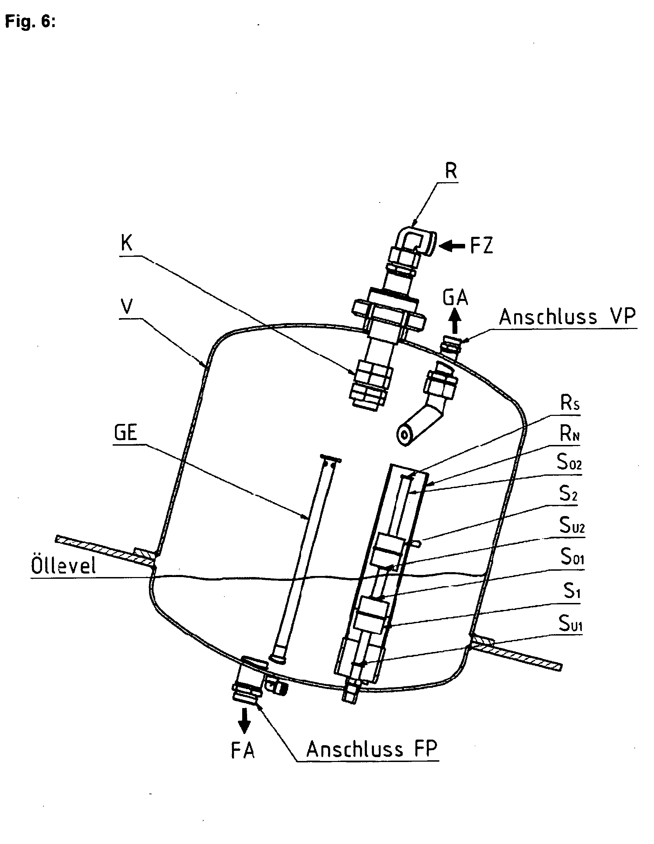

In den Figuren 5 und 6 wird eine derartige Neigungsdämpfungsvorrichtung gezeigt. In diesem Fall werden sogar zwei Schwimmkörper (S1 und S2) verwendet, die sich in vertikaler Richtung auf einem zentralen Rohr (R_{S}) bewegen können. Die Schwimmkörper haben jeweils einen oberen und unteren Anschlag (S_{O1}, S_{O2}, S_{U1} und S_{U2}). Die Position der Schwimmkörper kann beispielsweise über eine magnetische Markierung in Verbindung mit einem entsprechenden Reed-Kontakt ermittelt werden. Alternativ sind andere Ausführungsformen denkbar, beispielsweise auch auf optoelektronischer Basis. In diesem Fall liegt der im Normalbetrieb angestrebte Füllstand zwischen dem oberen Anschlag des unteren Schwimmkörpers (S_{O1}) und dem unteren Anschlag des oberen Schwimmkörpers (S_{U2}), (siehe Figuren 5 und 6). In diesem angestrebten Normalbetrieb verharren daher beide Schwimmkörper an den genannten Anschlägen. Wenn dieser Zustand verlassen wird (durch Absinken oder Ansteigen des Füllstandes) dann können entsprechende Regelungen an den Pumpen eingreifen, um wieder in den Normalbetrieb zu gelangen.

Nach dem Starten der Vorrichtung wird zunächst die Vakuumpumpe gestartet, welche die Vakuumkammer evakuiert. Dabei werden Drucke von -0,9 bis -0,2 bar, vorzugsweise -0,9 bis 0,5 bar eingestellt.

Die Eintrittspumpe fördert das Öl in den Vakuumbehälter bis der Niveauschwimmer die Austrittspumpe startet. Diese fördert das unten im Vakuumbehälter angesammelte getrocknete Fluid in einen Behälter. In vielen Fällen, z.B. im mobilen Einsatz auf Schiffen, in Fahr- oder Flugzeugen wird das Fluid im Kreislauf geführt, das heißt, das abgetrennte (beispielsweise getrocknete Fluid) wird wieder zum Ansaugort zurückgeführt (z.B. einem Ölbehälter).

Wenn es sich bei dem Fluidgemisch um ein Öl/Wassergernisch handelt, werden vorzugsweise Temperaturen zwischen 40° und 70°C eingestellt. Bei dieser Temperatur wird das Gemisch in den Vakuumbehälter über die oben genannte Kegelstumpf-Rundstrahldüse eingedüst, wobei die enthaltenen Wassertröpfchen in Wasserdampf übergehen. Dieser entstehende Wasserdampf wird zusammen mit der über einen Luftfilter einströmenden Luft von der Vakuumpumpe angesaugt und über einen Coalescerfilter und einem Schalldämpfer nach Außen gefördert. Optional kann ein Kohlefilter nachgeschaltet werden, der allerdings im Regelfall entbehrlich ist, weil die austretende Luft durch den Coalescerfilter im Regelfall einen Ölgehalt von < 5 ppm enthält. Die einströmende Luft wird über einen Luftfilter mit 10 µm Filtration und einer Blende mit einer definierten Blendenbohrung von ca. 5 mm und einem nachgeschalteten Drosselrückschlagventil in den Vakuumbehälter geleitet. Durch die mit dem Fluid eingebrachte Wärme wird innerhalb des Vakuumbehälters eine Temperatur erreicht, die die Umgebungsluft in die Lage versetzt, den Wasserdampf aufzunehmen.

Durch die Düsenform ist es unter anderem möglich, Motorenöle zu trocknen, auch die Trocknung von Dieselöl ist möglich.

Die beschriebene Vorrichtung kann in verschiedensten Bereichen der Technik eingesetzt werden, beispielsweise in Kraftwerken, Industriebetrieben, See- und Luftschiffen, Fahr- und Flugzeugen. Bevorzugt wird die Vorrichtung zur Trocknung von Ölen eingesetzt, beispielsweise Hydrauliköl, Schmieröl, Getriebeöl, Motorenöl, Turbinenöl und/oder Dieselöl.

Vorteile der erfindungsgemäßen Verwendung im Vergleich mit dem Stand der Technik sind nachfolgend zusammengefasst:
Im Vergleich zu Vorrichtungen, bei denen die Trennung unter Zuhilfenahme von Zentrifugalkräften bewirkt wird ist das erfindungsgemäße Verfahren deutlich effizienter, da durch das Zentrifugenverfahren nur geringe Volumenströme von < 20 L/min möglich sind.

Im Vergleich zu Vakuumtrocknern mit oberflächenvergrößernden Formkörpern ist zu bemerken, dass sich die erfindungsgemäße Vorrichtung durch kompaktere Baugröße auszeichnet und deutlich weniger schmutzanfällig ist. Entsprechendes gilt für Vakuumtrockner mit einer wendelförmigen (schraubenförmigen) Fluidführung, wie sie beispielsweise in der DE10024124C1 beschrieben wird.

Darüber hinaus überwindet die erfindungsgemäße Verwendung einer Vorrichtung ein Vorurteil in der Fachwelt, wie es beispielsweise in der DE10024124C1 beschrieben wird (s. dort Absatz 0006): Nach diesem Vorurteil sind Vorrichtungen zur Abscheidung von Wasser aus Öl, bei denen das Öl mittels einer Düse in einer Vakuumkammer zerstaubt wird mit einigen Nachteilen verbunden, wie beispielsweise einem Wiedereintrag von Luft und Wasser in das Öl, einer Verschmutzungsanfälligkeit sowie einer nicht kontrollierbaren Schaumbildung. Diese Vorurteile können durch die erfindungsgemäße Vorrichtung widerlegt werden, bei der es selbst bei langanhaltendem Betrieb und bei verschmutzten und/oder hochviskosen Ölen nicht zu den beschriebenen Nachteilen kommt.

### Beschreibung der Figuren:

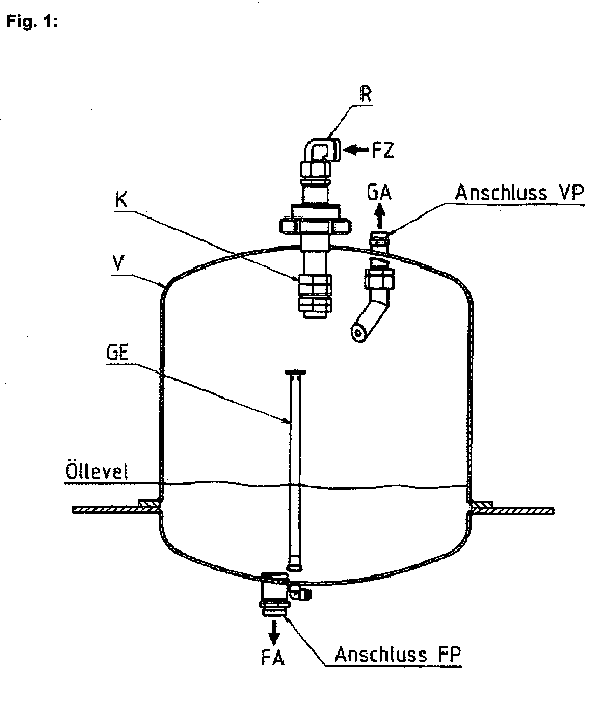

- **Fig. 1:**: Figur 1 zeigt den prinzipiellen Aufbau der beschriebenen Vorrichtung mit Kegelstumpf-Rundstrahldüse, Gaseinlass, Gasauslass und Fluidauslass

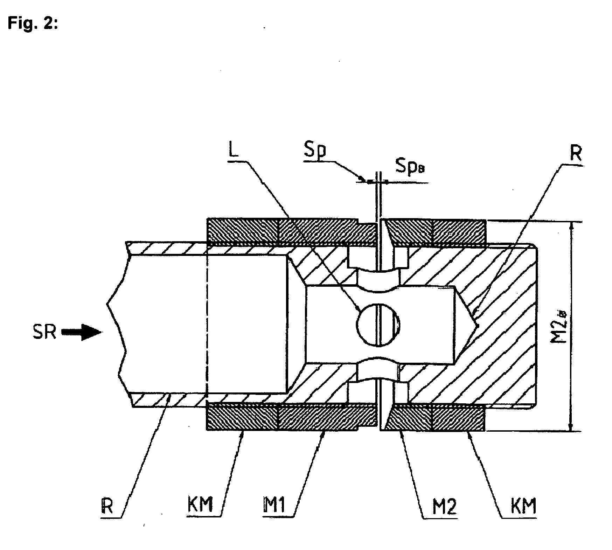

- **Fig. 2:**: Figur 2 zeigt den Aufbau der beschriebenen Kegelstumpf-Rundstrahldüse

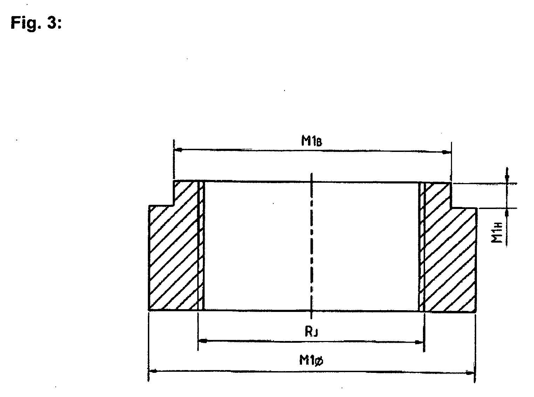

- **Fig. 3:**: Figur 3 zeigt die erste Überwurfmutter mit schulterförmiger Verjüngung

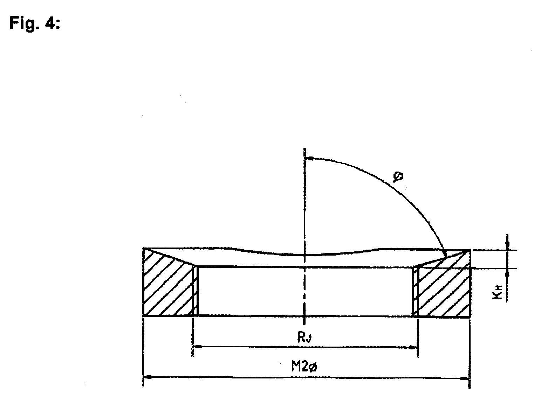

- **Fig. 4:**: Figur 4 zeigt die zweite Überwurfmutter mit konischer Ausformung
- **Fig. 5:**: Figur 5 zeigt die beschriebene Vorrichtung mit Neigungsdämpfungsvorrichtung
- **Fig. 6:**: Figur 6 zeigt ebenfalls die beschriebene Vorrichtung mit Neigungsdämpfungsvorrichtung, wobei die Gesamtanlage geneigt dargestellt ist.

### Bezugszeichenliste:

- R: Rohr
- R_{D}: Rohrdurchmesser am Rohreingang
- R_{J}: Rohrdurchmesser im verjüngten Teil des Rohres
- L: Loch mit Lochdurchmesser L_{D}
- E: verschlossenes Rohrende
- M1: erste Überwurfmutter mit schulterförmiger Verjüngung
- M1_{H}: Höhe der Schulter der ersten Überwurfmutter
- M1_{B}: Breite der Schulter der ersten Überwurfmutter
- M1_{ø}: Außendurchmesser der ersten Überwurfmutter mit schulterförmiger Verjüngung
- M2: zweite Überwurfmutter mit konischer Ausformung
- M2_{ø}: Außendurchmesser der zweiten Überwurfmutter mit konischer Ausformung
- ϕ: Konuswinkel
- K_{H}: Konushöhe
- Sp: Spalt mit Breite Sp_{B}
- SR: Strömungsrichtung
- KM: Kontermutter
- GE: Gaseinlass
- GA: Gasauslass
- FZ: Fluidzufuhr
- V: Vakuumkammer
- VP: Vakuumpumpe
- FP: Fluidpumpe
- FA: Fluidauslass
- K: Kegelstumpf-Rundstrahldüse
- R_{N}: Äußeres Rohr der Neigungsdämpfungsvorrichtung
- R_{S}: Inneres Rohrder Neigungsdämpfungsvorrichtung
- S: Schwimmkörper
- S_{O}: Oberer Anschlag des Schwimmkörpers
- S_{U}: Unterer Anschlag des Schwimmkörpers

## Patentansprüche

1. Verwendung einer Vorrichtung, enthaltend
eine Vakuumkammer (V),
eine Fluidzufuhr (FZ) durch eine Kegelstumpf-Rundstrahldüse (K) einen Flüssigkeitsauslass (FA) im Bodenbereich der Vakuumkammer zur Entnahme des getrockneten Fluides mittels einer Fluidpumpe (FP),
einen Gasauslass (GA), der mit einer Vakuumpumpe (VP) verbunden ist, einen regelbaren Gaseintritt (GE),
**dadurch gekennzeichnet, dass** die Kegelstumpf-Rundstrahldüse (K) besteht aus
einem Rohr (R) mit einem verschlossenen Ende (E),
wobei das Rohr (R) eine Rohrverjüngung vor dem verschlossenen Ende (E) aufweist,
wobei die Rohrverjüngung den Durchmesser des Rohres auf 90-30% des Eingangsdurchmessers (R_{D}) einschränkt,
2-8 orthogonal zur Strömungsrichtung (SR) im Bereich der Verjüngung angebrachte Löcher (L) als Austrittsöffnungen, wobei die Löcher (L) jeweils einen Durchmesser (L_{D}) zwischen einem zwanzigstel und der Hälfte des Rohrdurchmessers an der verjüngten Stelle (R_{J}) aufweisen,
eine erste Überwurfmutter (M1) mit einem Außendurchmesser von 1,25 - 2,5 -fachen des Rohrdurchmessers an der verjüngten Stelle (R_{J}) mit schulterförmiger Verjüngung,
wobei die Schulter eine Höhe von 0,1-10mm und eine Breite von 90-70% des ursprünglichen Durchmessers aufweist
eine zweite Überwurfmutter (M2) mit einem Außendurchmesser von 1,25 - 2,5 -fachen des Rohrdurchmessers an der verjüngten Stelle (R_{J}),
mit konischer Ausformung, wobei die Höhe des konischen Teils (K_{H}) zwischen 0,01 und 10 mm und der Konuswinkel (ϕ)zwischen 10° und 80° liegt,
wobei die erste und die zweite Überwurfmutter so an dem Rohr angeordnet sind, dass im Bereich der Löcher ein Spalt (Sp) von 0,01 bis 10 mm Breite (Sp_{b}) gebildet wird,
zur Trocknung von Ölen.

2. Verwendung einer Vorrichtung gemäß Anspruch 1, **dadurch gekennzeichnet, dass** das Rohr (D) ein Außengewinde aufweist.

3. Verwendung einer Vorrichtung gemäß Anspruch 1, **dadurch gekennzeichnet, dass** eine Füllstandsmesseinrichtung zur Bestimmung des Fluidfüllstandes mittels mindestens eines Schwimmkörpers (S) mit einem oberen (S_{O}) und einem unteren (S_{U}) Anschlag gebildet ist.

4. Verwendung einer Vorrichtung gemäß Anspruch 3, **gekennzeichnet, durch** eine Neigungsdämpfungsvorrichtung bestehend aus einem Rohr (R_{N}), in dem mindestens ein Schwimmkörper angeordnet ist, welches in der Mitte der Vakuumkammer vertikal angeordnet ist und welches oben und unten Öffnungen aufweist.

5. Verwendung einer Vorrichtung gemäß mindestens einem der Ansprüche 1-4 zur Trocknung von Hydrauliköl, Schmieröl, Getriebeöl, Motorenöl, Turbinenöl und/oder Dieselöl.

6. Verwendung einer Vorrichtung gemäß mindestens einem der Ansprüche 1-5 zum stationären oder mobilen Betrieb in oder auf Kraftwerken, Industriebetrieben, See- und Luftschiffen, Fahr- und Flugzeugen.

## Claims

1. Use of an apparatus, comprising
a vacuum chamber (V),
a fluid supply (FZ) by means of a truncated conical jet nozzle (K),
a liquid outlet (FA) in the floor area of the vacuum chamber for removing the dried fluid by means of a fluid pump (FP),
a gas outlet (GA), which is connected to a vacuum pump (VP),
a controllable gas inlet (GE),
**characterized by** that the truncated conical jet nozzle (K) consists of
a tube (R) with a closed end (E),
the tube (R) having a tapered portion before the closed end (E),
the tapered portion of the tube reducing the diameter of the tube to 90 to 30 % of the inlet diameter (R_{D}),
2 to 8 holes (L) as outlet openings arranged orthogonally to the flow direction (SR) in the region of the tapered portion, the holes (L) each having a diameter (L_{D}) between one-twentieth and one-half of the tube diameter at the tapered portion (R_{J}),
a first cap nut (M1) having an outer diameter of 1.25 to 2.5 times the tube diameter at the tapered portion (R_{J}),
with a shoulder-shaped tapered portion,
said shoulder having a height of 0.1 to 10 mm and a width of 90 to 70 % of the original diameter,
a second cap nut (M2) having an outer diameter of 1.25 to 2.5 times the tube diameter at the tapered portion (R_{J}),
with a conical shape, the height of the conical part (K_{H}) being between 0.01 and 10 mm, and the cone angle (ϕ) being between 10° and 80°,
the first and the second cap nuts being disposed on the tube such that in the area of the holes, a gap (Sp) of 0.01 to 10 mm in width (Sp_{b}) is formed, for drying oils.

2. The use of an apparatus according to claim 1, **characterized by** that the tube (D) comprises an external thread.

3. The use of an apparatus according to claim 1, **characterized by** that a level measuring device for determining the filling level of fluid is formed by at least one floating body (S) with an upper (So) and a lower (S_{U}) stop.

4. The use of an apparatus according to claim 3, **characterized by** an inclination damping device consisting of a tube (R_{N}), in which at least one floating body is arranged, and which is arranged vertically in the center of the vacuum chamber and which comprises top and bottom openings.

5. The use of an apparatus according to one of claims 1 to 4 for drying hydraulic oil, lubricating oil, gear oil, motor oil, turbine oil and/or diesel oil.

6. The use of an apparatus according to one of claims 1 to 5 for stationary or mobile use in or on power plants, industrial plants, sea and air vessels, vehicles and aircrafts.

## Revendications

1. Utilisation d'un appareil, comprenant une chambre à vide (V),
une alimentation de fluide (FZ) au moyen d'une buse à jet en forme de cône (K),
une sortie de liquide (FA) au fond de la chambre à vide destinée au prélèvement du fluide séché au moyen d'une pompe à fluide (FP),
une sortie de gaz (GA), qui est liée à une pompe à vide (VP),
une entrée de gaz (GE) commandable,
**caractérisée par** ce que la buse à jet en forme de cône (K) consiste en
un tuyau (R) avec une extrémité fermée (E),
le tuyau (R) ayant un rétrécissement du tuyau devant l'extrémité fermée (E),
le rétrécissement du tuyau réduisant le diamètre du tuyau à 90 à 30 % du diamètre d'entrée (R_{D}),
2 à 8 trous (L) disposés orthogonalement à la direction d'écoulement (SR) dans la zone du rétrécissement comme des ouvertures de sortie, chacun des trous (L) ayant un diamètre (L_{D}) entre un vingtième et la moitié du diamètre du tuyau au rétrécissement (R_{J}),
un premier écrou (M1) ayant un diamètre extérieur de 1,25 à 2,5 fois le diamètre du tuyau au rétrécissement (R_{J}),
avec un rétrécissement en forme d'épaule,
l'épaule ayant une hauteur de 0,1 à 10 mm et une largeur de 90 à 70 % du diamètre initial,
un deuxième écrou (M2) ayant un diamètre extérieur de 1,25 à 2,5 fois le diamètre du tuyau au rétrécissement (R_{J}),
en forme de cône, l'hauteur de la partie conique (K_{H}) étant entre 0,01 et 10 mm et l'angle de cône (ϕ) étant entre 10° et 80°,
le premier et le deuxième écrou étant agencé au tuyau de telle façon que dans la zone des trous, un espace (Sp) de 0,01 à 10 mm en largeur (Sp_{b}) soit réalisé,
pour le séchage d'huiles.

2. Utilisation d'un appareil selon la revendication 1, **caractérisée par** ce que le tuyau (D) comprend un filetage extérieur.

3. Utilisation d'un appareil selon la revendication 1, **caractérisée par** ce qu'un dispositif de mesure de niveau pour déterminer le niveau de remplissage du fluide est réalisé par au moins un corps flottant (S) avec une butée supérieure (S_{O}) et inférieure (S_{U}).

4. Utilisation d'un appareil selon la revendication 3, **caractérisée par** un dispositif d'amortissement d'inclinaison consistant en un tuyau (R_{N}), dans lequel au moins un corps flottant est agencé, qui est agencé verticalement au centre de la chambre à vide et qui comprend des ouvertures en haut et en bas.

5. Utilisation d'un appareil selon une des revendications 1 à 4 pour le séchage d'huile hydraulique, d'huile lubrifiante, d'huile de boîte de vitesses, d'huile de moteur, d'huile de turbine et/ou gazole.

6. Utilisation d'un appareil selon une des revendications 1 à 5 pour l'utilisation stationnaire ou mobile dans ou à des centrales électriques, installations industrielles, navires et dirigeables, véhicules et avions.
